# EUROPEAN PATENT APPLICATION

(11) **EP 1 197 860 A2**
(43) Date of publication of application: **17.04.2002**
(21) Application number: 01114218.9
(22) Date of filing: 12.06.2001
(51) Int. Cl.: G06F 11/00

(54) **Apparatus and method to identify computer system**

(30) Priority: 12.06.2000 JP 2000176002
(71) Applicant: Hitachi, Ltd., Chiyoda-ku, Tokyo 101-8010 (JP)
(72) Inventor: Ota, Kenji, Hitachi, Ltd., Intel. Property Group, Chiyoda-ku, Tokyo 100-8220 (JP); Mano, Tetsuro, Hitachi,Ltd., Intel. Property Group, Chiyoda-ku, Tokyo 100-8220 (JP)
(74) Representative: Strehl Schübel-Hopf & Partner

(57) **Abstract**

An apparatus (12) and a method to identify a computer system is provided, in which a computer system (11) can be identified even if an identifier (31c, 31d, 31e) acquired from software or hardware of the computer system (11) changes. To this end, the apparatus (12) and the method are provided with an identifier registration portion (123) and an identification judgement portion (122). The identifier registration portion (123) stores identifiers (31a, 31b, 31f, 31g) for identifying identification-target computer systems respectively. The identification judgement portion (122) refers to the identifiers (31a, 31b, 31f, 31g) registered in the identifier registration portion (123) and an identifier (31c, 31d, 31e) acquired from an identification-target computer system (11), and identifies the identification-target computer system (11). Further, an identifier weighting value registration portion (124) is provided. The identifier weighting value registration portion (124) stores weighting values (313) on identification items (311) constituting each identifier, in accordance with the respective identification items (311). The identification judgement portion (122) identifies the identification-target computer system (11) on the basis of the identifier weighting values (313).

## Description

### BACKGROUND OF THE INVENTION

The present invention relates to a system or a method to identify a computer system, and particularly to an apparatus and a method to identify a computer system, which can judge the identity of the computer system even if the configuration of the computer system is changed partially.

When a large number of computer systems installed at distant places are maintained on agreements, it is important to specify whether individual computer systems are, or not, computer systems to be maintained on agreements. Therefore, on the occasion of maintenance, information to identify computer systems to be maintained is registered in advance, and this registered identification information is compared with the identification information of a target computer system. Thus, each computer system to be maintained is identified. When such a computer system becomes ineligible for maintenance, the registration of the computer system is deleted. In such a manner, impersonating a contract computer system is prevented so that services are prevented from being provided for any user who has not yet made a contract.

To identify a computer system, information of hardware constituting the computer system, software installed in the computer system, or the like, is used as an identifier so that the computer system can be identified. For example, in a TCP/IP network, an IP address assigned to a computer system connected to the network can be used for identifying the computer system. Alternatively, a host name as setting information of software, an MAC address belonging to network interface hardware, a CPU number, or the like, may be used as an identifier to identify the computer system.

JP-A-8-129497 discloses a technique in which housing management information remaining unchanged even if the configuration of a system or any part constituting the system is changed is used as an identifier.

In each of the techniques described above, the identity of a computer system is judged on the basis of complete accord between an identifier retained on an identifying side and an identifier provided by the computer system to be identified.

Information such as the IP address, the host name, or the like, described above, is information specifying the computer system uniquely, but such information may be changed due to a change in the configuration of the network environment. The MAC address or the CPU number are information belonging to parts (hardware) constituting the computer system. Therefore, such information may be changed because of an exchange of a part due to a failure or the like. Thus, when the information belonging to the computer system is changed, there appears a difference between the identifier retained on the identifying side and the identifier provided by the computer system on the identified side. As a result, the computer system cannot be identified. It is therefore necessary to change the registered identifier for managing targets to be maintained whenever the network environment is changed or whenever a part is exchanged.

JP-A-8-129497 discloses a technique in which a computer system is identified by use of housing management information which is unchangeable permanently. In this case, however, it is necessary to prepare special-purpose hardware and store the housing management information in the hardware. Thus, the cost increases.

### SUMMARY OF THE INVENTION

To solve the foregoing problems, the present invention provides an apparatus to identify a computer system, which adopts the following means so that a computer system can be identified even if an identifier changes in accordance with a change in the software or hardware configuration of the computer system.

Identification information constituted by a plurality of identification items is acquired from an identification-target computer system. In accordance with the identification items, the acquired identification information is compared with identification information of the identification-target computer system registered in advance. Coefficients defined for the items of the identification information respectively are integrated about discordant ones of the items of the identification information so as to obtain an integrated value. On the basis of the integrated value and a predetermined threshold value, judgement is made as to whether the identification-target computer system can be identified or not. At this time, for example, when the integrated value is 0, it is concluded that the identification-target computer system can be identified. When the integrated value is not smaller than the threshold value, it is concluded that the computer system cannot be identified. In addition, when the integrated value is larger than 0 but smaller than the threshold value, whether the computer system can be identified or not is judged in accordance with the number of the discordant items of the identification information.

Further, also when an identifier of an identification-target computer system is registered, identification information constituted by a plurality of identification items is acquired from the identification-target computer system. In accordance with the identification items, the acquired identification information is compared with identification information of the identification-target computer system registered in advance. Coefficients defined for the items of the identification information respectively are integrated about discordant ones of the items of the identification information so as to obtain an integrated value. On the basis of the integrated value and a predetermined threshold value, it is judged whether the acquired identification information is allowed to be registered or not. At this time, for example, when the integrated value is not smaller than the threshold value, it is concluded that the identification information is allowed to be registered, and the acquired identification information is registered.

### BRIEF DESCRIPTION OF THE DRAWINGS

Fig. 1 is a diagram showing the outline of a system to identify a computer system;
Fig. 2 is a schematic flow chart of registration processing of an identifier;
Fig. 3 is a diagram showing an example of the identifier;
Fig. 4 is a diagram showing examples of identifiers registered in an identifier registration portion;
Fig. 5 is a diagram showing an example of weighting on identification items;
Fig. 6 is a detailed flow chart of the registration processing of the identifier;
Fig. 7 is a diagram showing an example of a received identifier;
Fig. 8 is a diagram showing another example of a received identifier;
Fig. 9 is a diagram showing a further example of a received identifier;
Fig. 10 is a diagram showing examples of identifiers in an identifier registration portion;
Fig. 11 is a schematic flow chart of identifier judgement processing;
Fig. 12 is a detailed flow chart of the identifier judgement processing;
Fig. 13 is a diagram showing the configuration of a remote maintenance system to which the present invention is applied; and
Fig. 14 is a diagram showing the configuration of a network call center to which the present invention is applied.

### DETAILED DESCRIPTION OF THE EMBODIMENTS

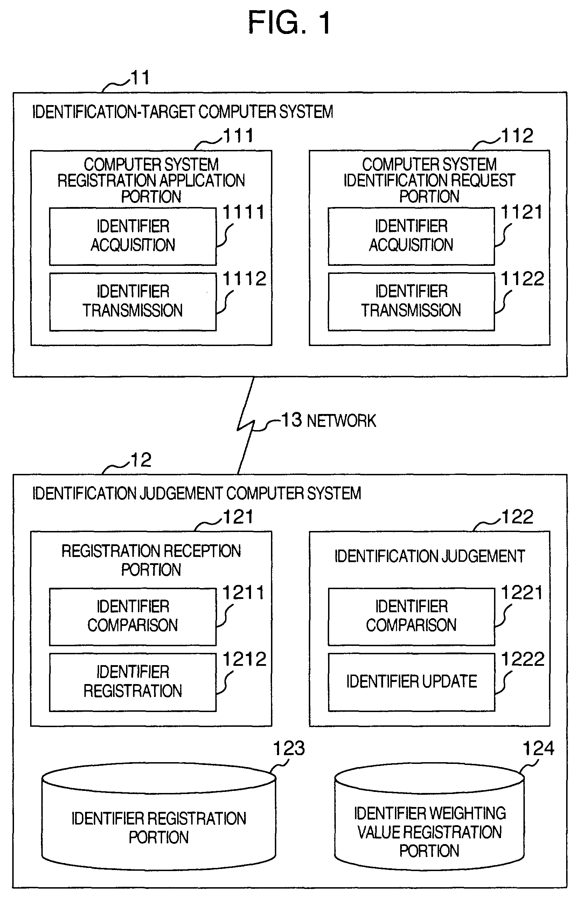

Embodiments of the present invention will be described below with reference to Figs. 1 to 12. Fig. 1 is a diagram showing an apparatus to identify a computer system according to an embodiment of the present invention. In Fig. 1, an identification-target computer system 11 to be identified has a registration application portion 111 and an identification request portion 112. The registration application portion 111 has an identifier acquisition processor 1111 and an identifier transmission processor 1112. The identifier acquisition processor 1111 acquires information of hardware or software constituting the identification-target computer system 11, and generates an identifier 31 which will be described later. The identifier transmission processor 1112 transmits the generated identifier 31 to a registration reception portion 121 of an identification judgement computer system 12, for example, through a network 13.

The identification request portion 112 has an identifier acquisition processor 1121 and an identifier transmission processor 1122. When the identification-target computer system 11 or the identification judgement computer system 12 issues an identification request, the identifier acquisition processor 1121 acquires the information of hardware or software constituting the identification-target computer system 11, and generates the identifier 31. The identifier transmission processor 1122 transmits the generated identifier 31 to an identification judgement portion of the identification judgement computer system 12 through the network 13.

The identification judgement computer system 12 has a registration reception portion 121, an identification judgement portion 122, an identifier registration portion 123 and an identification weighting value registration portion 124. The registration reception portion 121 has an identifier comparison processor 1211 and an identifier registration processor 1212. The identifier comparison processor 1211 compares the identifier received from the registration application portion 111 of the identification-target computer system with an identifier registered in the identifier registration portion 123. The identifier registration processor 1212 registers the received identifier in the identifier registration portion 123 unless the identifiers agree with each other as the above-mentioned comparison result, that is, unless the received identifier has been already registered.

The identification judgement portion 122 of the identification judgement computer system 12 has an identifier comparison processor 1221. The identifier comparison processor 1221 compares the identifier received from the identification request portion 112 of the identification-target computer system 11 with an identifier registered in the identifier registration portion 123. The identifier comparison processor 1221 replaces the identifier registered in the identifier registration portion 123 by the received identifier when the identifier comparison processor 1221 concludes that the received identifier is incident with the identifier registered in the identifier registration portion 123. The identification weighting value registration portion 124 accumulates judgement information for the identifier comparison processor 1221 to use for comparison processing.

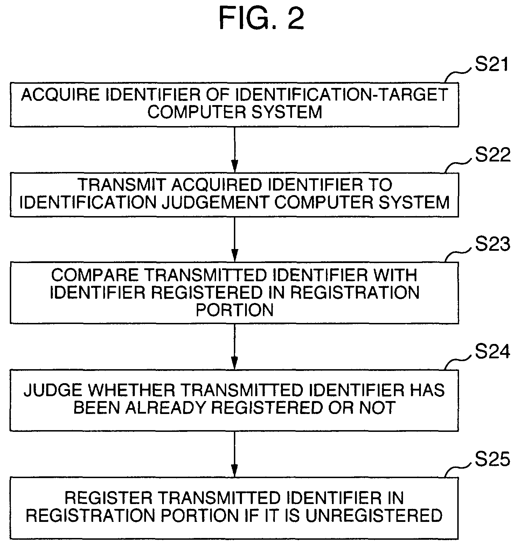

Fig. 2 is a flow chart showing the registration processing of an identifier. First, in Step S21, the identifier 31 of an identification-target computer system is acquired. In Step S22, the acquired identifier 31 is transmitted to the identification judgement computer system 12. In Step S23, the identification judgement computer system 12 compares the transmitted identifier 31 with an identifier registered in the identifier registration portion 123. In the comparison, identification values set for a plurality of identification items belonging to the identifier are used. The identification items will be described later. In Step S24, on the basis of the comparison result, the identification judgement computer system 12 judges whether the identifier 31 has been already registered. When it is concluded in Step S24 that the identifier 31 has not been registered, the transmitted identifier 31 is registered in the identifier registration portion 123 in Step S25. When it is concluded that the identifier 31 has been registered, the identifier 31 is not registered.

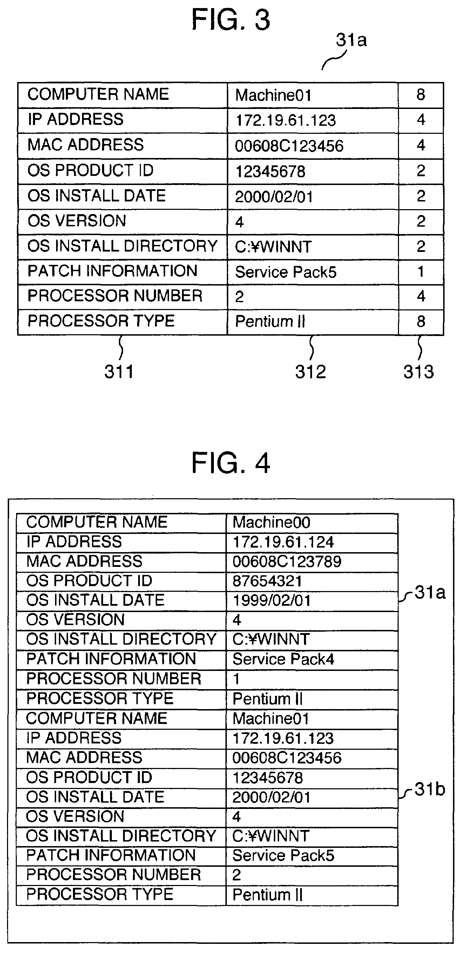

Fig. 3 is a diagram showing an example of an identifier. In Fig. 3, an identifier 31 is constituted by identification items 311. Each of the identification items 311 has an identification value 312 and a weighting value 313.

Fig. 4 is a diagram showing examples of identifiers registered in the identifier registration portion 123. As shown in Fig. 4, a plurality of identifiers 31a and 31b have been registered.

Next, the outline of the judgement processing of the identifier comparison processor 1221 will be described. When the comparison processor concludes that a received identifier is incident with an identifier registered in the registration portion, the comparison processor replaces the identifier registered in the registration portion by the received identifier. Next, description will be made about the conditions for making a conclusion that the received identifier is incident with the identifier registered in the registration portion.

First, when all the identification values of the identification items of the received identifier 31 agree with those of the identifier registered in the identifier registration portion 123 respectively, it is concluded that the received identifier is incident with the identifier registered in the registration portion.

Next, when a part of the identification values of the identification items of the received identifier 31 do not agree with those of the identifier registered in the identifier registration portion 123, it is concluded that the received identifier is incident with the identifier registered in the registration portion. That is, the identification values 312 concerning setting information of hardware or software may be changed. For example, when a network card is exchanged, the MAC address takes a different value. When a processor is added, the processor number changes. Thus, even if a part of the identification values 312 constituting the identifier 31 are different from those of the identifier 31 registered in the registration portion, it is necessary to conclude that both the identifiers 31 designate the same computer system.

However, when there is a difference in a large number of the identification values 312 of the identification items, it is necessary to conclude that the identifiers 31 are different to designate different computer systems. For example, when main hardware, a large number of hardware, a large number of software setting values, or the like, are changed so that the identification values 312 set for the identification items respectively are changed on a large scale, the identification-target computer system 11 can be regarded as another computer system than the one before the change.

Therefore, weighting values are added to the identification items respectively in advance. As the result of comparison, the weighting values on the identification items different in identification value are integrated to calculate a value representing the degree of disagreement. Thus, the identify of the computer system can be judged on the basis of the calculated value.

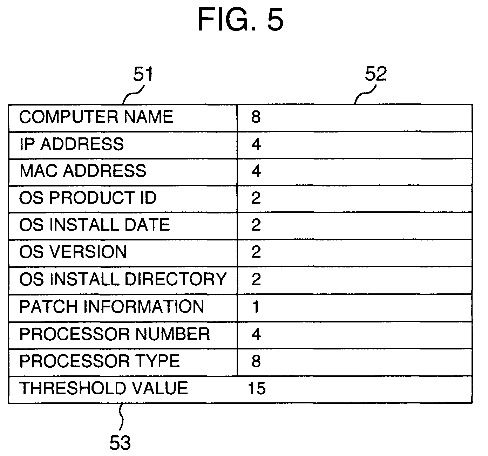

Fig. 5 is a diagram showing identification judgement information in which weighting values are added respectively to identification items of an identifier. In Fig. 5, the reference numeral 51 represents an identification item, the reference numeral 52 represents a weighting value, and the reference numeral 53 represents a threshold value for judgement. As shown in Fig. 5, a large weighting value "8" is given to the computer name or the processor type. On the other hand, corrected module information is changed whenever the corrected module is applied to the computer system. Therefore, a small weighting value "1" is given to such corrected module information.

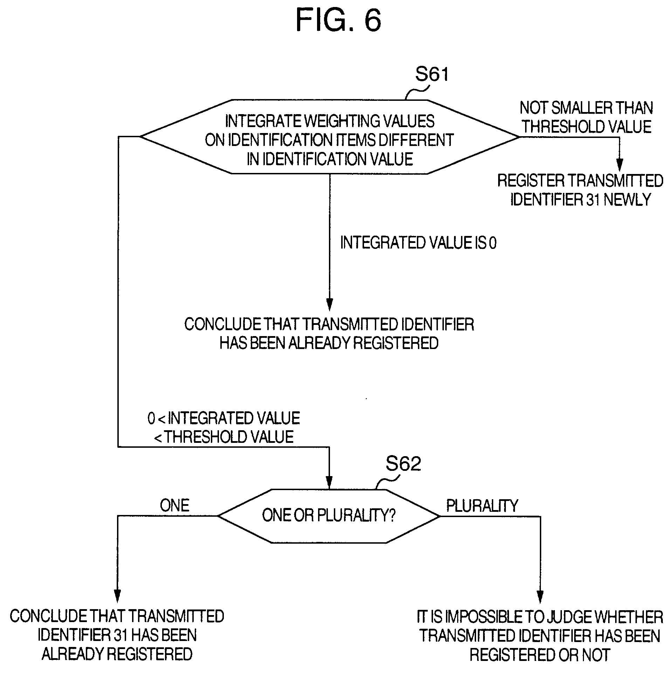

Fig. 6 is a flow chart showing the details of Steps S23 and S24 in the registration processing shown in Fig. 2. First, in Step S61, the identification judgement computer system 12 compares a transmitted identifier 31 with identifiers registered in the identifier registration portion 123 sequentially. For example, assume that the transmitted identifier is the identifier 31 shown in Fig. 3, and the identifiers registered in the identifier registration portion 123 are the identifiers 31a and 31b shown in Fig. 4. In this case, since the identifier 31 is identical with the identifier 31b, it is concluded that the transmitted identifier 31 has been already registered.

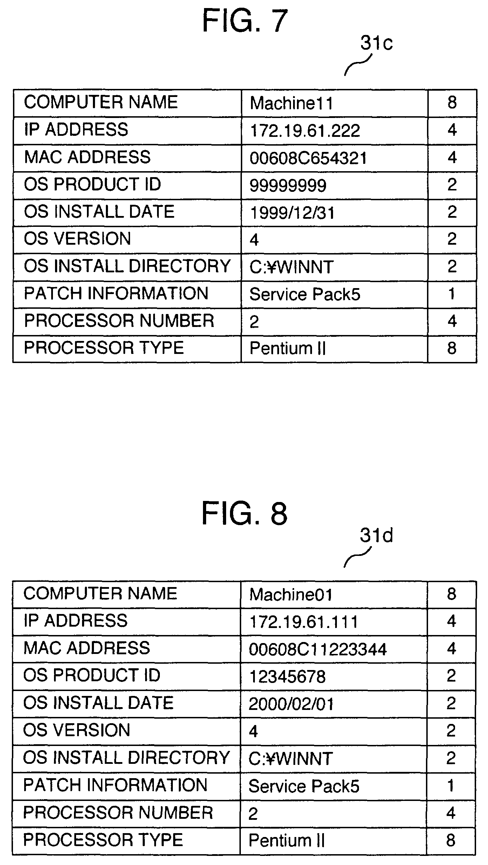

Next, assume that the transmitted identifier is an identifier 31c shown in Fig. 7. When the identifier 31c is compared with the registered identifier 31a, they are different in the identification values of the identification items "computer name", "IP address", "MAC address", "OS product ID", "OS install date", "patch information" and "processor number" respectively. In addition, the respective identification items have weighting values shown in Fig. 5. Therefore, the weighting values on the identification items different in identification value amount to 8+4+4+2+2+1+4, that is, "25". In the same manner, when the identifier 31c is compared with the identifier 31b, the weighting values on the identification items different in identification value amount to "20". These values are not smaller than the threshold value "15" shown in Fig. 5. From the above result, it is concluded that the transmitted identifier is an unregistered identifier. Thus, the identifier is registered newly.

Next, assume that the transmitted identifier is an identifier 31d shown in Fig. 8. When the identifier 31d is compared with the registered identifier 31a, the weighting values on the identification items different in identification value amount to "25". In the same manner, when the identifier 31d is compared with the identifier 31b, the weighting values on the identification items different in identification value amount to "8". Since the total of the weighting values with respect to the identifier 31b is smaller than the threshold value "15", the computer system having the identifier 31d is judged to be a registered computer system having the identifier 31a. Then, the processing moves to Step S62. That is, when the total of the weighting values with respect to the transmitted identifier 31 is not "0" and is smaller than the threshold value, the processing moves to Step S62.

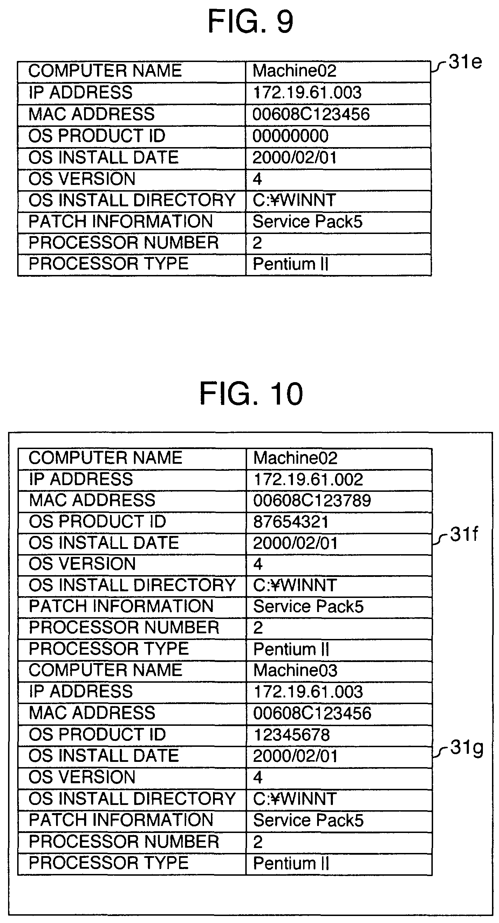

In Step S62, judgement is made as to whether there are, or not, registered a plurality of identifiers in which the total of weighting values with respect to the transmitted identifier 31 is not "0" and is smaller than the threshold value. If the number of such registered identifiers is one, it is concluded that the transmitted identifier has been already registered. If there are a plural number of such registered identifiers, it is concluded that it is impossible to judge whether the transmitted identifier has been registered or not. For example, assume that the transmitted identifier is an identifier 31e shown in Fig. 9, and the registered identifiers are identifiers 31f and 31g shown in Fig. 10. When the identifier 31e is compared with the registered identifier 31f, weighting values on identification items different in identification value amount to "10". On the other hand, when the identifier 31e is compared with the registered identifier 31g, weighting values on identification items different in identification value also amount to "10". Thus, the judgement is impossible. However, if items, such as the volume serial number of a hard disk, the initial creation date of a virtual memory file, and so on, on which one computer system is likely to differ from another are selected as identification items of identifiers, and further the number of identification items themselves is increased, it is possible to avoid the impossibility of identification practically.

Next, description will be made about the identification processing carried out by the identification judgement portion 122 of the identification judgement computer system. This processing is substantially similar to the registration processing of identifiers shown in Figs. 2 and 6. Therefore, the description will be made without specific examples of identifiers.

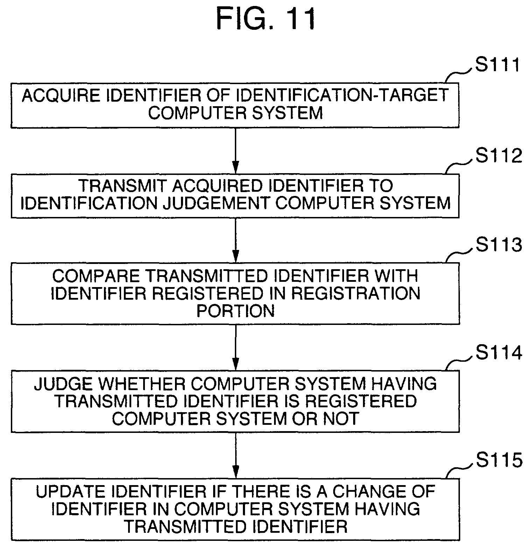

Fig. 11 is a flow chart showing the identification judgement processing of a computer system. First, in Step S111, an identifier 31 of an identification-target computer system is acquired. In Step S112, the acquired identifier 31 is transmitted to the identification judgement computer system 12. In Step S113, the identification judgement computer system 12 compares the transmitted identifier 31 with identifiers registered in the identifier registration portion 123 sequentially. In the comparison, identification values set for a plurality of identification items belonging to each identifier are used. In Step S114, it is judged whether the transmitted identifier 31 is incident with an identifier registered in the identifier registration portion 123 or not. In this judgement, a total of weighting values on identification items different in identification value between the transmitted identifier 31 and the registered identifier is compared with a predetermined threshold value in the same manner as in the registration processing. Thus, the identity of the identifier 31 can be judged. In Step S115, when it is concluded in Step S114 that the transmitted identifier 31 is incident with the identifier registered in the identifier registration portion 123, the identifier registered in the identifier registration portion is updated with the transmitted identifier.

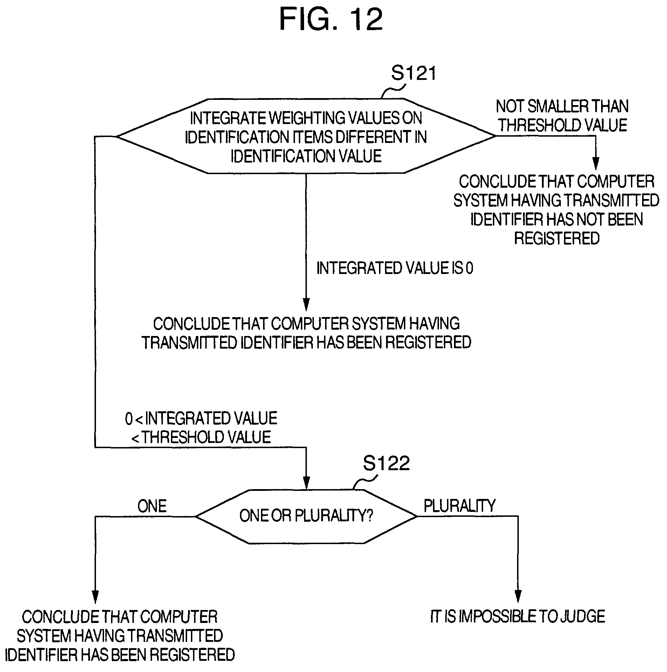

Fig. 12 is a diagram showing the details of Steps S113 and S114 in the identification judgement processing shown in Fig. 11. First, in Step S121, the identification judgement computer system 12 compares the transmitted identifier 31 with the identifiers registered in the identifier registration portion 123 sequentially. If the transmitted identifier 31 is incident with an identifier registered in the identifier registration portion 123, it is concluded that the transmitted identifier 31 has been already registered.

Next, the transmitted identifier 31 is compared with the registered identifier 31a. If a total of weighting values on identification items different in identification value between the transmitted identifier 31 and the registered identifier 31a is not smaller than a predetermined threshold value, it is concluded that the transmitted identifier is an unregistered identifier. However, in this step, the identifier is not registered newly.

Next, the transmitted identifier 31 is compared with a registered identifier. If there is a registered identifier in which a total of weighting values on identification items different in identification value between the transmitted identifier 31 and the registered identifier is not "0" and is smaller than the predetermined threshold value, the processing moves to Step S122. In Step S122, judgement is made as to whether there are, or not, registered a plurality of identifiers in which a total of weighting values with respect to the transmitted identifier 31 is not "0" and is smaller than the predetermined threshold value. If the number of such registered identifiers is one, it is concluded that the transmitted identifier has been already registered. If there are a plural number of such registered identifiers, it is impossible to judge whether the transmitted identifier has been registered or not. It is therefore impossible to judge whether the computer system having the transmitted identifier is a registered computer system or not.

According to this embodiment, weighting values are given to identification values of an identifier belonging to an identification-target computer system, so that the identity of the computer system can be judged even if the identification values change in some degree. In addition, even if the identification values have changed, the identification values which have changed are allowed to be registered automatically.

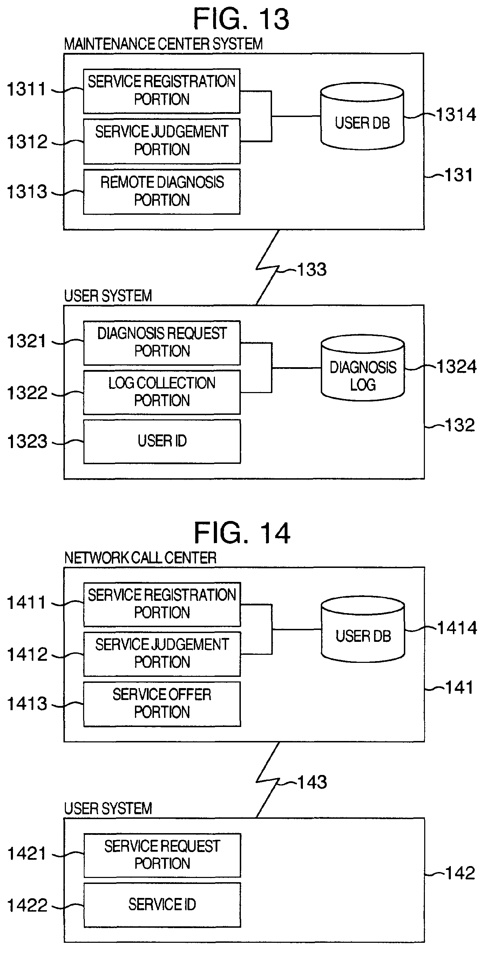

Figs. 13 and 14 show embodiments of systems to which the present invention is applied. Fig. 13 shows the configuration of a remote maintenance service system. On the other hand, Fig. 14 shows the configuration of a network call system which carries out a maintenance service request through a network.

In the remote maintenance system in Fig. 13, a user system 132 is connected to a maintenance center system 131 through a network 133 so that remote diagnosis of the user system 132 is carried out from the maintenance center system 131. In the user system 132, a log collection portion 1322 diagnoses the system periodically, and stores the diagnosis result in a diagnosis log 1324. A diagnosis request portion 1321 makes a request to the maintenance center system 131 for remote diagnosis on the basis of a user ID 1323.
At this time, a service registration portion 1311 of the maintenance center system 131 has a user DB 1314 in which users to be offered a remote diagnosis service have been registered. A service judgement portion 1312 refers to the user DB 1314 on the basis of the user ID 1323, and judges whether the user is, or not, one of the users to be offered a remote diagnosis service. If the user is identified as a user to be offered a service, the remote diagnosis portion 1313 collects the diagnosis log 1324, and carries out a remote diagnosis service. When the present invention is applied to the service judgement portion 1312 and one of identification information is set as the user ID 1323, a service offered to an unregistered user due to impersonation with the user ID 1323 is prevented. Further, if weighting values are changed in accordance with service contents to be offered, it is possible to carry out user identification management easily in response to a change of the user system.

In the network call system in Fig. 14, a user system 142 is connected to a network call center 141 through a network 143 so that the network call center 141 offers a service in response to a service call request from the user system 142. A service request portion 1421 makes a service request to the network call center 141 on the basis of a service ID 1422. At this time, in the network call center 141, the user system 142 to be offered a service has been registered in a user DB 1414 by a service registration portion 1411 in advance. In response to the service offering request from the service request portion 1421, a service judgement portion 1412 makes a judgement on the basis of the service ID 1422 and the user DB 1414 as to whether the user is a registered user or not. If the service judgement portion 1412 concludes that the user is a registered user, a service offering portion 1413 offers a service to the user system 142. When the present invention is applied to the service judgement portion 1412 and one of identification information is set as the service ID 1422, service offered to an unregistered user due to impersonation with the service ID 1422 is prevented. Further, if weighting values are changed in accordance with service contents to be offered, it is possible to carry out user identification management easily in response to a change of the user system.

As has been described above, according to the present invention, an identification-target computer system can be identified even if the configuration of the identification-target computer system is changed.

## Claims

1. A method to identify a computer system, comprising:
a step (S111) of acquiring identification information (31c, 31d, 31e) constituted by a plurality of identification items (311) from an identification-target computer system (11);
a step (S113) of comparing, in accordance with said identification items (311), said acquired identification information (31c, 31d, 31e) with identification information (31a, 31b, 31f, 31g) of identification-target computer systems registered in advance;
a step (S121) of integrating coefficients (313) about discordant ones of said identification items (311) of said identification information (31c, 31d, 31e) so as to obtain an integrated value, said coefficients (313) being defined for said identification items (311) respectively; and
a step (S114) of judging whether said identification-target computer system (11) can be identified or not, on the basis of said integrated value and a predetermined threshold value (53).

2. A method according to Claim 1, wherein said step (S114) includes:
a step (S121) of concluding that said identification-target computer system (11) can be identified when said integrated value is 0; and
a step (S122) of concluding that said identification-target computer system (11) cannot be identified when said integrated value is not smaller than said threshold value (53).

3. A method according to Claim 2, further comprising:
a step (S122) of judging whether said identification-target computer system (11) can be identified or not in accordance with the number of said discordant identification items (311) of said identification information (31) when said integrated value is larger than 0 and smaller than said threshold value (53).

4. A method according to Claim 3, wherein:
it is concluded that said identification-target computer system (11) can be identified when the number of said discordant identification items (311) of said identification information (31) is 1.

5. A method according to Claim 1, wherein said registration of identification information of said identification-target computer system (11) includes:
a step (S21) of acquiring identification information (31c, 31d, 31e) constituted by a plurality of identification items (311) from said identification-target computer system (11);
a step (S23) of comparing, in accordance with said identification items (311), said acquired identification information (31c, 31d, 31e) with registered identification information (31a, 31b, 31f, 31g) of identification-target computer systems;
a step (S61) of integrating coefficients (313) about discordant ones of said identification items (311) of said identification information (31c, 31d, 31e) so as to obtain an integrated value, said coefficients (313) being defined for said identification items (311) respectively; and
a step (S24) of judging whether said acquired identification information (31c, 31d, 31e) is allowed to be registered or not, on the basis of said integrated value and a predetermined threshold value (53).

6. A method according to Claim 5, wherein:
in said step (S24), it is concluded that said acquired identification information (31) is allowed to be registered and said acquired identification information (31) is registered when said integrated value is not smaller than said threshold value (53).

7. A method to identify a user system in a maintenance service system having user systems and a center system (131, 141), comprising the steps of:
acquiring identification information (31c, 31d, 31e) from a user system (132, 142);
comparing said acquired identification information (31c, 31d, 31e) with identification information (31a, 31b, 31f, 31g) of registered users registered in said center system (131, 141) in advance; and
identifying a registered user in accordance with a difference between said acquired identification information (31c, 31d, 31e) and said registered identification information (31a, 31b, 31f, 31g) compared with each other.

8. A method according to Claim 7, wherein:
said identification information (31c, 31d, 31e) includes any one of identification information items (311) of computer name, IP address, MAC address and processor type of said user system (132, 142);
weighting coefficients (313) set for said identification information items (311) respectively and a threshold value (53) for judging whether a registered user can be identified or not are registered in said center system (131, 141);
said acquired identification information (31c, 31d, 31e) is compared with said identification information (31a, 31b, 31f, 31g) registered in said center system (131, 141), in accordance with said identification information items (311);
said weighting coefficients (313) are integrated about discordant ones of said identification information items (311) so as to obtain an integrated value;
said integrated value is compared with said threshold value (53); and
said user system (132, 142) is identified as an unregistered user when said integrated value is not smaller than said threshold value (53).

9. An apparatus (12) to identify a computer system comprising:
an identifier registration portion (123) for storing an identifier (31) constituted by a plurality of identification items (311) for identifying an identification-target computer system (11);
an identifier reception portion for acquiring an identifier (31) from said identification-target computer system (11); and
an identification judgement portion (122) for comparing said identifier (31) in said identifier registration portion (123) with said identifier (31) acquired by said identifier reception portion, and judging whether said identification-target computer system (11) can be identified or not.

10. An apparatus (12) to identify a computer system according to Claim 9, further comprising:
an identifier weighting coefficient registration portion (124) constituted by weighting coefficients (313) set for said identification items (311) respectively, and a threshold value (53) for judging whether said identification-target computer system (11) can be identified or not;
wherein said identification judgement portion (122) compares said acquired identifier (31c, 31d, 31e) with said registered identifier (31a, 31b, 31f, 31g) in accordance with said identification information items (311), integrates said weighting coefficients (313) about discordant ones of said identification information items (311) respectively so as to form an integrated value, compares said integrated value with said threshold value (53), and concludes that said identification-target computer system (11) cannot be identified when said integrated value is not smaller than said threshold value (53).

11. An apparatus (12) to identify a computer system according to Claim 9, further comprising:
a registration reception portion (121) for registering an identification-target computer system (11) in said identifier registration portion (123);
wherein said registration reception portion (121) compares said identifier (31) in said identifier registration portion (123) with said identifier acquired by said identifier reception portion, so as to judge whether said identification-target computer system (11) is allowed to be registered or not.

12. An apparatus (12) to identify a computer system according to Claim 11, further comprising:
an identifier weighting coefficient registration portion (124) constituted by weighting coefficients (313) set for said identification items (311) respectively, and a threshold value (53) for judging whether said identification-target computer system (11) can be identified or not;
wherein said registration reception portion (121) compares said acquired identifier (31c, 31d, 31e) with said registered identifier (31a, 31b, 31f,31g) in accordance with said identification information items (311), integrates said weighting coefficients (313) about discordant ones of said identification information items (311) so as to form an integrated value, compares said integrated value with said threshold value (53), and registers said acquired identifier (31c, 31d, 31e) newly when said integrated value is not smaller than said threshold value (53).
